# EUROPÄISCHE PATENTSCHRIFT

(11) **EP 3 551 915 B1**
(45) Veröffentlichungstag und Bekanntmachung des Hinweises auf die Patenterteilung: **04.08.2021**
(21) Anmeldenummer: 17818076.6
(22) Anmeldetag: 05.12.2017
(51) Int. Cl.: F16K 17/30, F16K 17/04

(54) **BYPASS-VENTIL UND MOLCH MIT EINEM BYPASS-VENTIL**
BYPASS VALVE AND PIG HAVING A BYPASS VALVE
VANNE DE DÉRIVATION ET FURET ÉQUIPÉ D'UNE VANNE DE DÉRIVATION

(30) Priorität: 08.12.2016 DE 202016106843 U
(43) Veröffentlichungstag der Anmeldung: 16.10.2019
(73) Patentinhaber: Rosen Swiss AG, 6370 Stans (CH)
(72) Erfinder: VOß, Wilhelm, 49811 Lingen (DE); KRALLMANN, Heiner, 49767 Twist (DE); HEILE, Nico, 49577 Kettenkamp (DE); BREMKE, Rene, 49594 Alfhausen (DE); SCHNEKE, Daniel, D-49811 Lingen (DE)
(74) Vertreter: Wischmeyer, André
(86) Internationale Anmeldenummer: PCT/EP2017/081565
(87) Internationale Veröffentlichungsnummer: WO 2018/104327

(56) Entgegenhaltungen:
- US-A- 2 860 356
- US-A1- 2010 170 535

## Beschreibung

Die vorliegende Erfindung betrifft ein Bypass-Ventil für einen Inspektions- und/oder Reinigungsmolch, der durch eine Medium-durchströmte Rohrleitung zu bewegen ist, wobei das Bypass-Ventil einen mit einem Strömungsprofil versehenen Innenraum umfasst, in dem ein in Längsrichtung des Ventils über ein Kraftspeichermittel druckabhängig bewegbarer Kolben angeordnet ist, der zwischen einer ersten, einen Bypass für das Medium erlaubenden offenen Stellung des Ventils und einer zweiten, den Bypass zumindest im wesentlichen verschließenden Stellung beweglich ist.

Für die Reinigung und Inspektion von Rohrleitungen haben sich Molche, die als Stahlkörper mit verschieden harten Polyurethan-Scheiben oder Polyurethan-Manschetten ausgeführt sind, als am effektivsten und flexibelsten erwiesen. Zur Reinigung oder Inspektion wird der Molch mit dem zu transportierenden Medium durch die Leitung getrieben. Hierbei schiebt der Reinigungsmolch zum Beispiel Lagerstättenmaterial, das mit dem Gas aus dem Bohrloch kommt und sich in der Leitung ablagert, heraus. Mit zunehmender Molchgeschwindigkeit nimmt die Reinigungswirkung bzw. die Qualität der bei einer Inspektion aufgenommen Daten der Rohrleitung rapide ab, was insbesondere in Gasleitungen, bei denen Gas mit hoher Geschwindigkeit durch die Rohrleitung getrieben wird, zu Problemen führen kann.

Um dennoch eine effektive Reinigung bzw. Vermessung zu erzielen, ist aus der US 2010/0170535 A1 ein Gegenstand nach dem Oberbegriff des Anspruchs 1 bekannt, bei dem ein Kolben einerseits während des Einsetzens des Molches in die Pipeline sowie andererseits auch während einer Fahrt durch die Pipeline zwischen einer offenen Position und einer im Wesentlichen den Bypass verschließenden geschlossenen Position nahezu instantan wechseln kann. Vor dem Lauf kann durch Einstellung eines Kraftspeichermittels die von diesem auf den Kolben ausgeübte Kraft verändert werden. Der Molch kann somit in einem geringen Maß an die Rohrleitungsbedingungen angepasst werden.

Damit der Molch an kleineren Hindernissen wie zum Beispiel Wandstärkensprüngen, Schweißnahtdurchgängen oder kleineren Beulen nicht stecken bleibt, wird aufgrund der durch erhöhte Reibung bewirkten Verlangsamung des Vortriebs eine Druckdifferenz aufgebaut, die bei einem bestimmten Wert den Kolben in die engste Position des Ventils presst. Das Ventil schließt, wobei ggf. ein ein Verklemmen des Ventils vermeidender Leckagestrom verbleibt, solange, bis der entstehende Druckanstieg zu einem Überwinden des Hindernisses und zu einer mitunter sehr hohen Beschleunigung des Molches führt. Der Kolben wird wieder in die geöffnete Position überführt, wenn sich die Druckdifferenz zwischen vor und hinter dem Molch wieder in einem ausreichenden Maß abgebaut hat.

Mit den sich stark ändernden Geschwindigkeiten, insbesondere mit einer starken Beschleunigung nach einem Feststecken gehen Verschlechterungen der Reinigung bzw. Datenaufnahme einher, was im Extremfall zu einem erneuten Reinigungs- bzw. Inspektionslauf führen kann.

Aus der US 2,860,356 ist ein Reinigungsmolch bekannt, der eine Ventilanordnung zu entnehmen ist, in der ein Ventilmittel in einer Überdruck- bzw. Maximalposition komplett aus dem Ventilgehäuse heraustritt.

Es ist Aufgabe der vorliegenden Erfindung, die Geschwindigkeit eines durch die Leitung fahrenden Molches besser regulieren zu können.

Die Aufgabe wird gelöst durch einen Gegenstand gemäß Anspruch 1. Vorteilhafte Ausgestaltungen der Erfindung sind den auf Anspruch 1 rückbezogenen Unteransprüchen zu entnehmen. Ebenfalls wird die Aufgabe durch Gegenstände nach den Ansprüchen 10 bzw. 11 gelöst. Vorteilhafte Ausgestaltungen sind jeweils der nachfolgenden Beschreibung zu entnehmen.

Erfindungsgemäß ist der Kolben ausgehend von der ersten Stellung über die zweite Stellung in dieselbe Richtung weiter in eine den Bypass wieder öffnende Maximalstellung überführbar. Es versteht sich, dass der in der Maximalstellung freigegebene Strömungsquerschnitt deutlich kleiner ist als der in der ersten Stellung vorhandene freie Strömungsquerschnitt und weiterhin deutlich größer ist als der in der Verschlussstellung bzw. zweiten Stellung des Kolbens vorhandene Querschnitt. Ein etwaiger freier Querschnitt für einen Leckagestrom ist nur dazu da, ein Festklemmen des Kolbens zu verhindern.

Durch die Möglichkeit, das Bypass-Ventil bzw. dessen Kolben in eine Maximalstellung zu überführen, kann insbesondere bei oftmals nicht absehbaren Extrem-Hindernissen, wie zum Beispiel sehr großen Beulen, bei denen der Molch vollständig stecken bleibt, eine Zerstörung des Molches oder gar der Rohrleitung vermieden werden. In einem solch extremen Fall erhöht sich der Differenzdruck zwischen den Rohrleitungsbereichen vor und hinter dem Molch bzw. dem entsprechenden Bypass-Ventil extrem und der Kolben geht bei Anliegen eines vorzugsweise einstellbaren Öffnungsdrucks von zumindest 5, vorzugsweise zumindest 7 oder 8 bar und bis zu 14 bar in die Maximalstellung über, sodass der Bypass wieder geöffnet ist und der Maximaldruck reduziert wird. Dies gewährleistet die Integrität der Anlage und verhindert die Totalabschaltung der Rohrleitung im Falle eines Feststeckens des Molches.

Die erfindungsgemäß beschriebenen Vorteile ergeben sich somit für ein Bypass-Ventil insbesondere dann, wenn es Teil eines Inspektions- oder Reinigungsmolches ist.

Darüber hinaus ist der Kolben in einem Bereich des Innenraums vorzugsweise zur druckabhängigen Einnahme von Zwischenpositionen zwischen der ersten und der zweiten Stellung, insbesondere in einem Antriebsdruckbereich zwischen 0,01 und 0,5, insbesondere zwischen 0,02 und 0,4 bar, ausgebildet, um einen druckgeregelten Volumenstrom durch das Bypass-Ventil zu ermöglichen. In Längs- und Durchströmrichtung des Bypass-Ventils betrachtet befindet sich der Kolben somit vorzugsweise zunächst in einer Öffnungsstellung, weiter vorverlagert bei größerem Differenzdruck dann in einer mittleren Position in einer zumindest im Wesentlichen geschlossenen Stellung und dann noch weiter vorverlagert ab einem kritischen Öffnungsdruck in einer Maximalstellung, die einen unter extremen Bedingungen notwendigen Strom durch das Bypass-Ventil erlaubt.

Insbesondere befindet sich der Kolben mit seiner maximalen Querschnittsfläche in der Maximalstellung in einem bezüglich einer Durchströmrichtung vorverlagerten bzw. nach vorne verlagerten verbreiterten Bereichs des Innenraums des Bypass-Ventils.

Für einen nicht nur im Wesentlichen binär (auf/zu) sondern insbesondere in Abhängigkeit des anstehenden Druckes druckgeregelten Volumenstrom durch das Bypass-Ventil ist das Strömungsprofil des Innenraums und/oder das Profil des Kolbens strömungsoptimiert dergestalt ausgebildet, dass in zumindest 50 % des Antriebsdruckbereichs der durch das Bypass-Ventil durchgeleitete Volumenstrom sich um nicht mehr als 60 % ändert. Die hierfür notwendige Form kann beispielsweise für jedes Bypass-Ventil unter Verwendung von auf empirischen Beobachtungen basierenden Berechnungsmethoden auffindbar und somit für das jeweils eingesetzte Bypass-Ventil von den jeweiligen Rohrleitungsbedingungen und eingesetzten Medien abhängig definierbar sein. Bei einer solchen, druckgeregelten Betätigung des Bypass-Ventils verbleibt der Molch länger in dem gewünschten Geschwindigkeitsbereich.

Ausgehend von einer Eingangsöffnung verjüngt sich das Profil des Innenraums bzw. der Innenraum des Ventils zunächst gleichmäßig, um dann im Übergangsbereich zu einem mittleren Ventilbereich sich deutlich stärker zu verengen. Anschließend ist ein Innenraumbereich mit gleichbleibenden Innendurchmesser vorhanden ist, wobei sich anschließend der Innenraum wieder mit einer insbesondere stärkeren absoluten Steigung als im sich verjüngenden Bereich wieder aufweitet. Dieser stärkere Grad der Aufweitung ist insbesondere für das schlagartige Anliegen eines Öffnungsdruckes sinnvoll, um die sich gerade bei nahezu inkompressiblen Medien ergebende Gefahr einer Beschädigung des Molches/Bypass-Ventils bzw. der Rohrleitung zu vermeiden.

Darüber hinaus sind die sich verjüngenden und aufweitenden Bereiche strömungsoptimiert ausgelegt dahingehend, dass eine möglichst laminare Strömung erzeugt wird. Somit ist das Kolbenprofil auch dergestalt an den sich verjüngenden Bereich angelehnt, dass sich mit zunehmenden Weg in Längsrichtung der für eine Durchströmung vorhandene freie Querschnitt in einem Maß verändert, der einen möglichst gleichbleibenden Volumenstrom in Abhängigkeit des anstehenden Druckes ermöglicht.

Der Bypass ist insbesondere groß genug und nimmt bis zu 25 % des Leitungsquerschnitts ein, um eine signifikante Geschwindigkeitsreduktion zu erreichen. Der Durchlassraum im Ventil wurde somit dergestalt angepasst, dass durch den Bypass der Volumenstrom in einem großen Bereich konstant gehalten werden kann. Bei Veränderungen des Arbeitsdruckes, des Mediums oder der gewünschten Arbeitsgeschwindigkeit kann der Arbeitsbereich des Bypass-Ventils durch Veränderung des oder der Kraftspeichermittel angepasst werden.

Die Konstruktion ist vergleichsweise mechanisch einfach und sicher ausgebildet, wenn der Kolben einen Hohlstangenbereich aufweist, in dem das Kraftspeichermittel zumindest teilweise angeordnet ist und über einen Zentralbolzen geführt wird.

Vorteilhafterweise erfolgt die Einnahme der Maximalstellung gegen die Änderung, insbesondere die Kompression eines zweiten Kraftspeichermittels und/oder nach der druckabhängigen Freigabe eines zusätzlichen Kolbenarbeitswegs. Gerade durch die Verwendung zweier mit unterschiedlichen Arbeitsbereichen ausgelegten Kraftspeichermitteln kann eine praktikable Überdruckschaltung des Bypass-Ventils erreicht getan werden, wobei durch Einsatz von beispielsweise Federn oder Gasdruckzylindern als Kraftspeichermittel diese entsprechend den gewünschten bzw. vorhandenen Bedingungen und Leitungsrahmenbedingungen ausgelegt werden können.

Vorzugsweise sind die beiden Kraftspeichermittel dergestalt ausgelegt, dass sich ausgehend von der verschlossenen Stellung das zweite Kraftspeichermittel zu einer mit der Maximalstellung stärker in Längsrichtung komprimiert als das erste Kraftspeichermittel. Insbesondere kann es sich bei dem ersten Kraftspeichermittel um eine dann zusammengedrückte Feder handeln, die nicht weiter oder nur noch minimal komprimierbar ist, während das weitere, zweite Kraftspeichermittel erst dann signifikant sich in Längsrichtung zusammendrücken lässt, wenn der gewünschte Öffnungsdruck anliegt. Beispielsweise kann es sich bei dem zweiten Kraftspeichermittel um eine Mehrzahl von in Längsrichtung hintereinander angeordneten Tellerfedern handeln, deren Federkonstanten deutlich größer sind als diejenige einer vorab für den Normalbetrieb des Bypass-Ventils verwendeten Spiralfeder.

Hierdurch kann darüber hinaus das Bypass-Ventil im Mittelbereich kürzer ausgebildet werden und die Auslegung des Bypass-Ventils ist besser an die jeweiligen Rahmenbedingungen anpassbar.

Vorteilhafterweise sind die beiden Kraftspeichermittel in Längsrichtung betrachtet hintereinander und aneinander anliegend angeordnet, wobei das Aneinanderanliegen auch über dazwischenliegende, über vorzugsweise einen Zentralbolzen geführte Einlegescheiben erfolgen kann.

Die sich aus der Konstruktion des Bypass-Ventils ergebenden Wirkungen liegen insbesondere dann vor, wenn das Bypass-Ventil in einem Molch zur Inspektion und/oder Reinigung von Rohrleitungen verwendet wird. Entsprechend wird die eingangs gestellte Aufgabe sowohl durch einen Molch gelöst, bei dem das vor- bzw. nachstehend beschriebene Bypass-Ventil in einem Zentralkörper des Molches angeordnet ist, als auch durch einen Molch zur Inspektion und/oder Reinigung von Rohrleitungen, bei dem der Zentralkörper durch das außenseitig vorzugsweise hohlzylindrische Bypass-Ventil zumindest mit ausgebildet wird.

Weitere Vorteile und Einzelheiten der Erfindung lassen sich der nachfolgenden Figurenbeschreibung entnehmen.

In den Abbildungen zeigt schematisch dargestellt:
Fig. 1 eine Ansicht eines erfindungsgemäßen Gegenstands,
Fig. 2 den Gegenstand nach Fig. 1 in einer vorderen Ansicht,
Fig. 3 den Gegenstand nach Fig. 2 in einem Schnitt entlang A-A,
Fig. 4), b) und c) einen weiteren erfindungsgemäßen Gegenstand in verschiedenen Betriebsstellungen.
Fig. 5 ein Volumenstrom-Druck-Diagramm des erfindungsgemäßen Gegenstands nach den Fig. 4 a) bis c).

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll, werden funktional gleichwirkende Elemente mit identischen Bezugsziffern versehen.

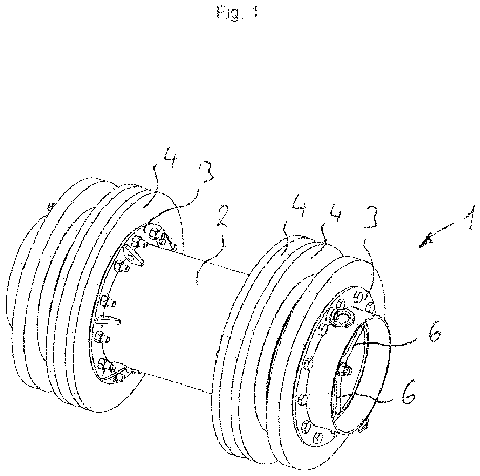

Ein Reinigungsmolch 1 umfasst nach Fig. 1 einen Zentralkörper 2, an dem über Flansche 3 befestigte Manschetten 4 angeordnet sind. Mit diesen wird eine Rohrleitung gereinigt.

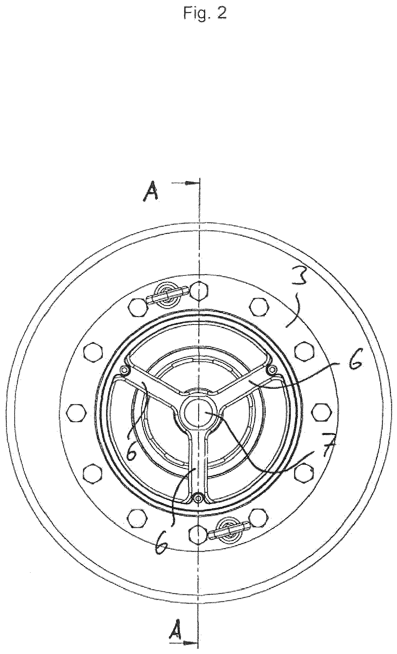

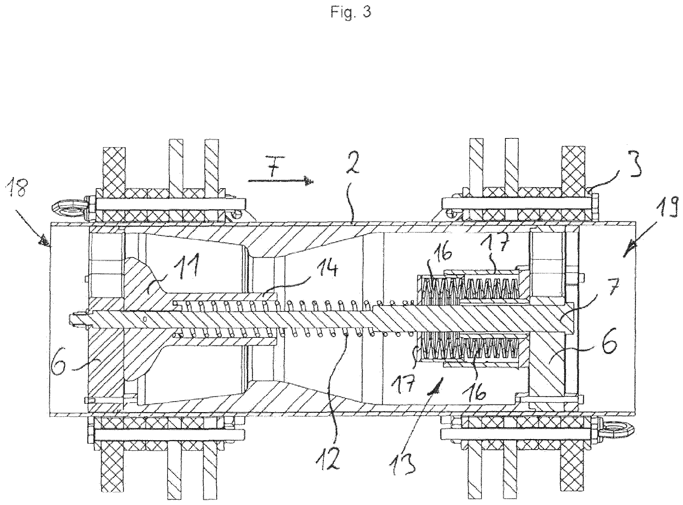

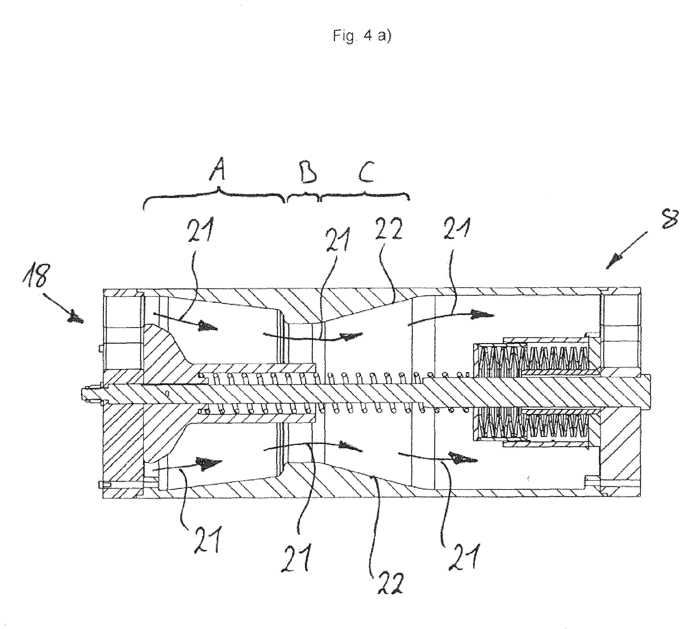

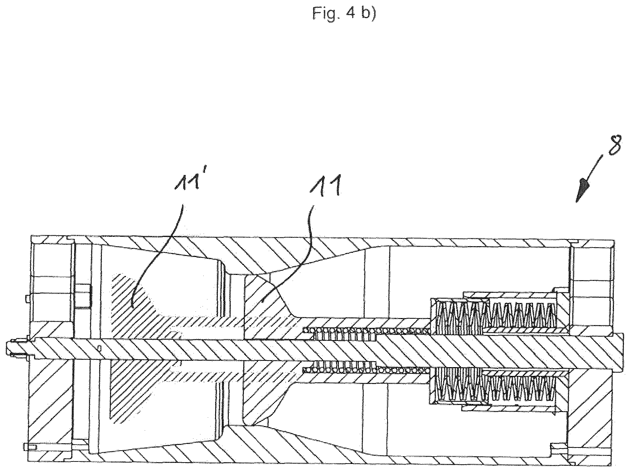

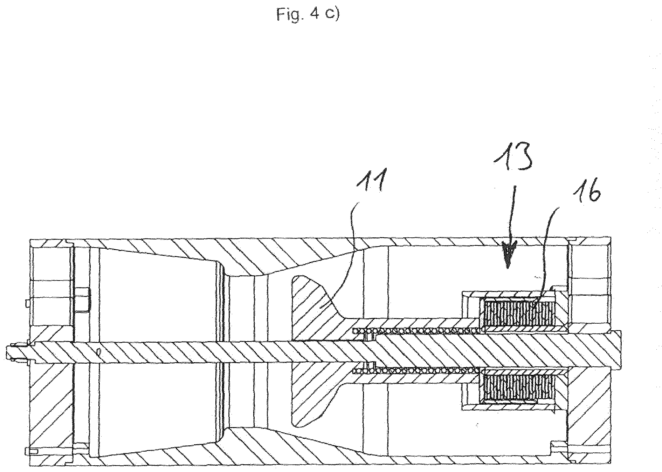

Der Zentralkörper 2 ist hohl ausgebildet und weist über drei innere Abstandshalter 6 gehalten einen Zentralbolzen 7 auf (vgl. Fig. 2). In dem Schnitt A-A nach Fig. 3 ist ein erfindungsgemäßes Bypass-Ventil 8 (vgl. Fig. 4 a)) in dem hohlen Zentralkörper 2 angeordnet. Die Abstandshalter 6 sind Teil des Bypass-Ventils. Sie halten den Zentralbolzen 7, der der Führung eines Kolbens 11 sowie zweier Kraftspeichermittel 12, 13 dient. Das Kraftspeichermittel 12 ist teilweise in einem Hohlstangenbereich eines Kolbenstangenbereichs 14 angeordnet und als Spiralfeder ausgebildet. Das weitere Kraftspeichermittel 13 umfasst eine Mehrzahl von aneinander angeordneten Tellerfedern 16, die in hohlzylindrischen Schalen 17, die gegeneinander bewegt werden können, angeordnet sind. An der in Fig. 3 linken Hohlzylinderschale 17 ist das erste Kraftspeichermittel angeordnet, so dass die beiden Kraftspeichermittel in Längsrichtung F, die auch der generellen Durchflussrichtung entspricht, nacheinander aneinander anliegen.

Der Inspektionsmolch 1 weist einen Einströmbereich 18 und einen Ausströmbereich 19 auf, durch die das Medium einenends in das Bypass-Ventil 8 eintreten kann und anderenends in den es gelangt, wenn es aus dem Ventil 8 ausströmt.

In der Fig. 3 befindet sich der Kolben 11 in einer ersten Öffnungsstellung, in der ein maximaler Durchstrom durch das Bypass-Ventil 8 möglich ist.

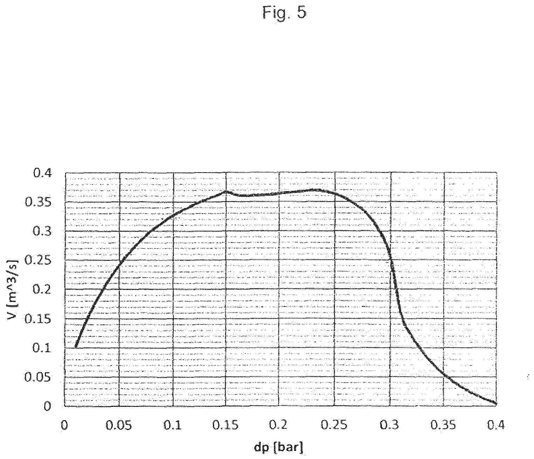

Diese Position besitzt der Kolben 11 auch in einem in dem erfindungsgemäßen Ausführungsbeispiel nach Fig. 4 a), wobei Pfeile 21 die Strömungsrichtung durch das Bypass-Ventil 8 wiedergeben. In der Schnittansicht auch nach der Fig. 4 a) wird das Profil des Innenraums durch die Kanten 22 kenntlich gemacht. Ausgehend von einer Eingangsöffnung 18 liegt zunächst ein sich kontinuierlich dann jedoch schlagartig verjüngender erster Bereich A vor. In diesem Bereich A ist das Strömungsprofil des Innenraums und das Profil des Kolbens strömungsoptimiert dergestalt ausgebildet, dass in zumindest 50 % des Antriebsdruckbereichs von vorzugsweise 0,02 bis 0,4 bar der durch das Bypass-Ventil 8 durchgeleitete Volumenstrom sich um nicht mehr als 60 % ändert (vgl. Fig. 5).

An diesen Bereich stößt vorgelagert in Strömungsrichtung F ein Bereich B mit im Wesentlichen gleichbleibenden Innendurchmesser an, in dem der Kolben 11 in einer bis auf einen geringen Leckagestrom für einen geschlossenen Zustands des Bypass-Ventils 8 angeordnet ist. Wiederum weiter anschließend befindet sich ein Bereich C, in dem bei Erreichen eines Maximaldrucks zwecks Vermeidung von Zerstörung des Bypass-Ventils 8 bzw. des Molches 1 oder der Rohrleitung das Bypass-Ventil 8 wieder geöffnet wird.

Entsprechend ist der Bereich A für das Bypass-Ventil der Arbeitsbereich in einem Druckbereich bis 0,4 bar. Der Bereich B, der mit der zugehörigen Kolbenposition in der 4 b) gezeigt ist stellt einen Arbeitsbereich von vorzugsweise 0,4 bis 8 bar dar. Schraffiert dargestellt ist der Kolben 11 in einer Zwischenposition, in der der Kolben 11 dergestalt druckgeregelt in Längsrichtung F verschoben ist, dass sich der Volumenstrom der in der Fig. 5 gezeigten Kurve ergibt.

In dem Ausführungsbeispiel nach der Fig. 4 c) liegt dann an dem in der Figur linken Ende des Bypass-Ventils 1 ein Arbeitsdruck bzw. Antriebs- oder einfach nur Druck von mehr als 8 bar an, so dass die Tellerfedern 16 des weiteren Kraftspeichermittels 13 komprimiert werden und der Kolben 11 in die Maximalstellung überführt wird. Der von dem Bereich 14 der Kolbenstange ausgebildet Hohlbereich kann in Längsrichtung F betrachtet hierbei dergestalt ausgebildet sein, dass er die Spiralfeder 12 in ihrer maximal in Längsrichtung komprimierten Stellung exakt aufnimmt, so dass das rechte Ende des Bereichs 14 der Kolbenstange bündig mit dem in der Fig. 4 c) rechten Ende der Spiralfeder 12 abschließt und somit beide Enden auf den senkrecht stehenden Teil der Hohlzylinderschale 17 drücken, und somit das weitere Kraftspeichermittel 13 komprimieren.

In dem Volumenstrom-Druck-Diagramm nach Fig. 5 ist auf der X-Achse der am Molch 1 von hinten anliegende Druck sowie auf der Y-Achse der hieraus sich ergebende Volumenstrom dargestellt. Erkennbar ist über einen relativ großen Druckbereich der Volumenstrom vergleichsweise plateauartig ausgebildet, sodass sich eine möglichst konstante Geschwindigkeit des Molches ergibt bzw. der Molch nicht in für eine Reinigung oder Inspektion kritische Geschwindigkeitsbereiche gelangt.

## Patentansprüche

1. Bypass-Ventil für einen Inspektions- und/oder Reinigungsmolch, der durch eine Medium-durchströmte Rohrleitung zu bewegen sind, wobei das Bypass-Ventil (8) einen mit einem Strömungsprofil versehenen Innenraum umfasst, in dem ein in Längsrichtung des Bypass-Ventils über ein Kraftspeichermittel (12) druckabhängig bewegbarer Kolben (11) angeordnet ist, der zwischen einer ersten, einen Bypass für das Medium erlaubenden offenen Stellung des Bypass-Ventils und einer zweiten, den Bypass zumindest im Wesentlichen verschließenden Stellung beweglich ist, wobei der Kolben (11) ausgehend von der ersten Stellung über die bei größerem Differenzdruck in Längsrichtung weiter vorverlagerte zweite Stellung ab einem kritischen Öffnungsdruck in dieselbe Richtung weiter in eine den Bypass wieder öffnende Maximalstellung überführbar ist, **dadurch gekennzeichnet, dass** der in der Maximalstellung freigegebene Strömungsquerschnitt deutlich kleiner ist als der in der ersten Stellung vorhandene Strömungsquerschnitt und weiterhin deutlich größer ist als der in der zweiten Stellung des Kolbens vorhandene Querschnitt.

2. Bypass-Ventil nach Anspruch 1, **dadurch gekennzeichnet, dass** der Kolben (11) zur druckabhängigen Einnahme von Zwischenpositionen in einem Bereich (A) zwischen der ersten und der zweiten Stellung, insbesondere in einem Antriebsdruckbereich zwischen 0,01 und 0,5 bar, ausgebildet ist, um einen druckgeregelten Volumenstrom durch das Bypass-Ventil (8) zu ermöglichen.

3. Bypass-Ventil nach einem der vorherigen Ansprüche, **dadurch gekennzeichnet, dass** sich die Maximalstellung in einem bezüglich einer Durchströmrichtung (F) vorverlagerten und verbreiterten Bereich des Innenraums befindet.

4. Bypass-Ventil nach einem der vorherigen Ansprüche, **dadurch gekennzeichnet, dass** das Strömungsprofil des Innenraums und/oder das Profil des Kolbens (11) strömungsoptimiert dergestalt ausgebildet ist, dass in zumindest 50 % des Antriebsdruckbereichs der durch das Bypass-Ventil (8) durchgeleitete Volumenstrom sich um nicht mehr als 60% ändert.

5. Bypass-Ventil nach einem der vorherigen Ansprüche, **dadurch gekennzeichnet, dass** sich das Strömungsprofil des Innenraums zunächst kontinuierlich verjüngt, für die geschlossene Stellung in Längsrichtung einen gleichbleibenden Innendurchmesser aufweist und sich anschließend wieder mit einer insbesondere stärkeren absoluten Steigung als im sich verjüngenden Bereich wieder aufweitet.

6. Bypass-Ventil nach einem der vorherigen Ansprüche, **dadurch gekennzeichnet, dass** der Kolben (11) einen Hohlstangenbereich (14) aufweist, in dem das Kraftspeichermittel (12) zumindest teilweise angeordnet ist und über einen Zentralbolzen (7) geführt wird.

7. Bypass-Ventil nach einem der vorherigen Ansprüche, **dadurch gekennzeichnet, dass** die Einnahme der Maximalstellung gegen die Änderung, insbesondere die Kompression eines zweiten Kraftspeichermittels (13) und/oder nach der druckabhängigen Freigabe eines zusätzlichen Kolbenarbeitswegs erfolgt.

8. Bypass-Ventil nach Anspruch 7, **dadurch gekennzeichnet, dass** die beiden Kraftspeichermittel (12, 13) dergestalt ausgelegt sind, dass sich ausgehend von der verschlossenen Stellung das zweite Kraftspeichermittel (13) zur Einnahme der Maximalposition stärker in Längsrichtung komprimiert als das erste Kraftspeichermittel.

9. Bypass-Ventil nach Anspruch 8, **dadurch gekennzeichnet, dass** die beiden Kraftspeichermittel (12, 13) in Längsrichtung betrachtet hintereinander und aneinander anliegend angeordnet sind.

10. Molch zur Inspektion und/oder Reinigung von Rohrleitungen, **gekennzeichnet durch** ein in einem Zentralkörper (2) des Molches (1) angeordnetes Bypass-Ventil (8) nach einem der vorherigen Ansprüche.

11. Molch zur Inspektion und/oder Reinigung von Rohrleitungen, **gekennzeichnet durch** einen durch ein Bypass-Ventil (8) nach einem der vorherigen Ansprüche zumindest mit ausgebildeten Zentralkörper (2).

## Claims

1. A bypass valve for an inspection and/or cleaning pig which can be moved through a pipe through which a medium flows, wherein the bypass valve (8) comprises an interior space provided with a flow profile, in which a piston (11) is arranged which can be moved in the longitudinal direction of the bypass valve via a force storage means (12) depending on the pressure, which piston (11) is movable between a first, open position of the bypass valve permitting a bypass for the medium, and a second position at least substantially closing the bypass, wherein the piston (11), starting from the first position, via the second position which is shifted further downstream in the longitudinal direction in case of a larger differential pressure, can be, starting at a critical opening pressure, transferred further in the same direction to a maximum position which is opening the bypass again, **characterized in that** the flow cross section released in the maximum position is significantly smaller than the flow cross section present in the first position, and, furthermore, is significantly larger than the cross section present in the second position of the piston.

2. The bypass valve according to claim 1, **characterized in that** the piston (11) is formed for assuming intermediate positions within an area (A) between the first and second positions in a pressure-dependent manner, especially in a driving pressure range between 0.01 and 0.5 bar, in order to facilitate a pressure-controlled volume flow through the bypass valve (8).

3. The bypass valve according to any one of the preceding claims, **characterized in that** the maximum position is located in a widened area of the interior space which is shifted downstream with respect to a direction of through flow (F).

4. The bypass valve according to any one of the previous claims, **characterized in that** the flow profile of the interior space and/or the profile of the piston (11) are formed to be flow-optimized in such a way that in at least 50% of the driving pressure range the volume flow passed through the bypass valve (8) does not change by more than 60%.

5. The bypass valve according to any one of the preceding claims, **characterized in that** the flow profile of the interior space initially tapers continuously, has a constant inner diameter in the longitudinal direction for the closed position, and then expands again with an absolute slope that is, in particular, steeper than in the tapering area.

6. The bypass valve according to any one of the preceding claims, **characterized in that** the piston (11) has a hollow rod portion (14), in which the force storage means (12) is arranged at least partly and is routed via a central bolt (7).

7. The bypass valve according to any one of the preceding claims, **characterized in that** the assumption of the maximum position takes place against the change, in particular the compression of a second force storage means (13) and/or after the pressure-dependent release of an additional piston working path.

8. The bypass valve according to claim 7, **characterized in that** the two force storage means (12, 13) are designed in such a way that, starting from the closed position, the second force storage means (13) for assuming the maximum position compresses more heavily in the longitudinal direction than the first force storage means.

9. The bypass valve according to claim 8, **characterized in that** the two force storage means (12, 13) are arranged one after and bearing against one another when viewed in the longitudinal direction.

10. A pig for inspection and/or cleaning pipes, **characterized by** a bypass valve (8) according to any one of the preceding claims that is arranged in a central body (2) of the pig (1).

11. A pig for inspection and/or cleaning pipes, **characterized by** a central body (2) at least partially formed by a bypass valve (8) according to any one of the preceding claims.

## Revendications

1. Vanne de dérivation pour un furet d'inspection et/ou de nettoyage, qui peut être déplacé à travers une canalisation traversée par le fluide, dans laquelle la vanne de dérivation (8) comprend un espace intérieur pourvu d'un profil d'écoulement dans lequel un piston (11) mobile est disposé dans une direction longitudinale de la vanne de dérivation par l'intermédiaire d'un moyen de stockage d'énergie (12) en fonction de la pression, ledit piston est mobile entre une première position ouverte de la vanne de dérivation permettant une dérivation pour le fluide et une seconde position qui ferme au moins sensiblement la dérivation, dans laquelle le piston (11) partant de la première position par la seconde position, qui est encore avancée dans la direction longitudinale lorsque la pression différentielle est plus grande, à partir d'une pression critique d'ouverture dans la même direction plus loin dans une position maximale qui réouvre la dérivation, **caractérisée en ce que** la section d'écoulement libérée dans la position maximale est nettement inférieure à la section d'écoulement présente dans la première position et qu'elle est en outre nettement plus grande que la section présente dans la seconde position du piston.

2. Vanne de dérivation selon la revendication 1, **caractérisée en ce que** le piston (11) est conçu pour la prise de positions intermédiaires en fonction de la pression dans une zone (A) entre la première et la seconde position, en particulier dans une plage de pression d'entraînement comprise entre 0,01 et 0,5 bar pour permettre un débit volumétrique régulé en pression à travers la vanne de dérivation (8).

3. Vanne de dérivation selon l'une des revendications précédentes, **caractérisée en ce que** la position maximale est située dans une zone de l'espace intérieur qui est avancée et élargie par rapport à une direction d'écoulement (F).

4. Vanne de dérivation selon l'une des revendications précédentes, **caractérisée en ce que** le profil d'écoulement de l'intérieur et/ou le profil du piston (11) est conçu de manière optimisée en termes d'écoulement de sorte que le débit volumique passant à travers la vanne de dérivation (8) dans au moins 50 % de la plage de pression d'entraînement ne varie pas de plus de 60 %.

5. Vanne de dérivation selon l'une des revendications précédentes, **caractérisée en ce que** le profil d'écoulement de l'espace intérieur se rétrécit d'abord de manière continue, présente un diamètre intérieur constant pour la position fermée dans la direction longitudinale et s'élargit ensuite à nouveau avec une pente absolue particulièrement plus forte que dans la zone qui se rétrécit.

6. Vanne de dérivation selon l'une des revendications précédentes, **caractérisée en ce que** le piston (11) présente une zone de tige creuse (14) dans laquelle le moyen de stockage d'énergie (12) est au moins partiellement disposé et est guidé par un boulon central (7).

7. Vanne de dérivation selon l'une des revendications précédentes, **caractérisée en ce que** la prise de la position maximale intervient contre le changement, en particulier la compression d'un second moyen de stockage d'énergie (13) et/ou après la libération en fonction de la pression d'un trajet de travail de piston supplémentaire.

8. Vanne de dérivation selon la revendication 7, **caractérisée en ce que** les deux moyens de stockage d'énergie (12, 13) sont conçus de sorte qu'à partir de la position fermée, le second moyen de stockage d'énergie (13) se comprime davantage dans la direction longitudinale que le premier moyen de stockage d'énergie pour la prise de la position maximale.

9. Vanne de dérivation selon la revendication 8, **caractérisée en ce que** les deux moyens de stockage d'énergie (12, 13), vus dans la direction longitudinale, sont disposés l'un derrière l'autre et de manière adjacente l'un à l'autre.

10. Furet d'inspection et/ou de nettoyage de canalisations, **caractérisé par** une vanne de dérivation (8) selon l'une des revendications précédentes, disposée dans un corps central (2) du furet (1).

11. Furet d'inspection et/ou de nettoyage de canalisations, **caractérisé par** un corps central (2) formé au moins par une vanne de dérivation (8) selon l'une des revendications précédentes.
